# EUROPÄISCHE PATENTSCHRIFT

(11) **EP 3 464 037 B1**
(45) Veröffentlichungstag und Bekanntmachung des Hinweises auf die Patenterteilung: **19.02.2020**
(21) Anmeldenummer: 17710230.8
(22) Anmeldetag: 10.03.2017
(51) Int. Cl.: B62J 7/08, B62K 19/46

(54) **GEPÄCKBEHÄLTNIS FÜR EIN MOTORRAD MIT INTEGRIERTER GEPÄCKSICHERUNG**
LUGGAGE CONTAINER FOR A MOTORBIKE HAVING INTEGRATED LUGGAGE SECURING
COFFRE À BAGAGES POUR MOTO AVEC SÉCURITÉ BAGAGE

(30) Priorität: 25.05.2016 DE 102016209073
(43) Veröffentlichungstag der Anmeldung: 10.04.2019
(73) Patentinhaber: Bayerische Motoren Werke Aktiengesellschaft, 80788 München (DE)
(72) Erfinder: SIEVERS-PAULSEN, Johann, 85354 Freising (DE); REINHART, Peter, 82380 Peissenberg (DE)
(86) Internationale Anmeldenummer: PCT/EP2017/055678
(87) Internationale Veröffentlichungsnummer: WO 2017/202514

(56) Entgegenhaltungen:
- DE-A1- 10 130 098
- FR-A1- 2 809 690
- US-A- 5 538 169
- US-A1- 2007 205 240

## Beschreibung

Die Erfindung betrifft ein Gepäckbehältnis für ein Kraftfahrzeug, insbesondere für ein Motorrad oder ein motorradähnliches Fahrzeug, gemäß dem Oberbegriff des Patentanspruchs 1.

Gepäckbehältnisse, wie Koffer oder Taschen, sind insbesondere bei einem Einsatz auf einem Motorrad oder einem motorradähnlichen Fahrzeug besonderen Anforderungen unterworfen, da die Gepäckbehältnisse üblicherweise am Fahrzeug montiert sind und vom Nutzer in diesem Zustand be- oder entladen werden. Insbesondere bei einem seitlich an einem Fahrzeug angebrachten Gepäckbehältnis werden bisher in dessen Stauraum zusätzliche Halteblenden vorgesehen, die ein Herausfallen von Gegenständen für den Fall verhindern sollen, dass das Gepäckbehältnis geöffnet wird. Dies ist vorallem bei jenen Seitenkoffern und Seitentaschen relevant, die nicht nur seitlich am Fahrzeug angeordnet sondern ebenfalls seitlich geöffnet werden.

Die bekannten Halteblenden sind üblicherweise steif ausgeführt und verschließen im montierten Zustand zumindest einen Teil der zum Be- und Entladen genutzten Behälteröffnung, Daher kann zwar ein unbeabsichtigtes Herausfallen des Gepäcks verhindert werden, doch ist für ein Beladen mit größeren Gegenständen meist eine vollständige Demontage der Halteblenden erforderlich. Ein lediglich teilweises Entfernen der Halteblenden ist nicht möglich.

Weitere Gepäckbehältnisse sind beispielsweise aus der DE 101 30 098 A1 sowie der US 2007/205240 A1 bekannt, wobei die DE 101 30 098 A1 ein Gepäckbehältnis nach dem Oberbegriff von Anspruch 1 offenbart.

Aufgabe der Erfindung ist es daher ein Gepäckbehältnis bereitzustellen, welches eine zuverlässige Sicherung gegen herausfallendes Gepäck bereitstellt und dennoch ein leicht handhabbares Be- und Entladen ermöglicht.

Diese Aufgabe wird gelöst mittels eines Gebäckbehältnisses mit den Merkmalen des Patentanspruchs 1. Vorteilhafte Ausführungsformen ergeben sich aus den abhängigen Patentansprüchen.

Demnach wird ein Gepäckbehältnis für ein Kraftfahrzeug, insbesondere ein Motorrad oder ein motorradähnliches Fahrzeug, bereitgestellt mit:
- einem ersten Behälterteil, welches ein Stauvolumen zum Verstauen von Gepäck definiert und eine Behälteröffnung zum Be- und Entladen des Stauvolumens aufweist, und
- einem zweiten Behälterteil zum wahlweisen Verschließen des Gepäckbehältnisses.

Außerdem weist der erste Behälterteil in einem Randbereich der Behälteröffnung eine Netzanordnung mit einem Rückhaltenetz zum zumindest teilweisen Verschließen der Behälteröffnung auf. Zusätzlich ist die Netzanordnung zum Verstellen des Rückhaltenetzes zwischen mindestens zwei Positionen ausgebildet, um einen durch das Rückhaltenetz verschlossenen Anteil der Behälteröffnung zu variieren.

Das Gepäckbehältnis umfasst also eine Wandung oder ein Gehäuse, das mindestens zweiteilig ausgebildet ist und den ersten Behälterteil und den zweiten Behälterteil umfasst. Der erste Behälterteil ist beispielsweise zur Befestigung an dem Fahrzeug vorgesehen und stellt das Stauvolumen bereit, welches zur Aufnahme des Gepäcks dient. Hierzu kann der erste Behälterteil zum Beispiel schalenförmig ausgestaltet sein.

Der zweite Behälterteil ist zum Verschließen des Gepäckbehältnisses vorgesehen und kann zum Beispiel als flacher Deckel ausgebildet sein oder ebenfalls schalenförmig, um zusätzlichen Stauraum bereitzustellen. Ein leichtes Öffnen und Schließen des Gepäckbehältnisses kann erzielt werden, indem der zweite Behälterteil beweglich, insbesondere klappbar oder schwenkbeweglich, mit dem ersten Behälterteil verbunden ist.

Um in dem geöffneten Zustand des Gepäckbehältnisses ein Herausfallen des in dem Stauvolumen des ersten Behälterteils angeordneten Gepäcks zu verhindern, ist die Netzanordnung vorgesehen, die mit Hilfe ihres Rückhaltenetzes die Behälteröffnung zumindest abschnittsweise verschließt. Hierzu kann das Rückhaltenetz im Bereich der Behälteröffnung aufgespannt werden, so dass das Gepäck innerhalb des Stauvolumens zurückgehalten wird. Um zusätzlich ein Be- und Entladen des Stauvolumens zu erleichtern, ist die Netzanordnung zum Verstellen des Rückhaltenetzes zwischen den mindestens zwei Positionen ausgebildet. Auf diese Weise kann ein durch das Rückhaltenetz verschlossener Anteil der Behälteröffnung variiert werden und somit je nach Bedarf der verbleibende geöffnete Anteil der Behälteröffnung vergrößert oder verkleinert wird. Es brauchen folglich keine Bauteile, wie zum Beispiel die bekannten starren Halteblenden, im Bedarfsfall vom Nutzer mit zusätzlichem Aufwand aus- oder eingebaut werden.

Befindet sich das Rückhaltenetz also in einer ersten Position, kann der von dem Rückhaltenetz erste verschlossene Anteil beispielsweise größer als ein zweiter verschlossener Anteil sein, der sich ergibt, wenn das Rückhaltenetz in einer zweiten Position angeordnet ist. Es versteht sich, dass diese Ausführungen anhand von zwei definierten Positionen lediglich beispielhaft sind und grundsätzlich eine beliebige Anzahl von Positionen beziehungsweise Zwischenpositionen möglich sind.

Das Rückhaltenetz ist vorzugsweise als textiles Netz mit beliebig wählbarer Maschenweite oder als textiles Gewebe ausgebildet. Dementsprechend ist das Rückhaltenetz flexibel und faltbar und kann dadurch leicht aufgespannt oder zusammengefaltet werden. Optional ist das Rückhaltenetz dehnbar ausgebildet, so dass eine leichte Größenanpassung zum Verschließen unterschiedlich großer Anteile der Behälteröffnung möglich ist.

Des Weiteren kann die Netzanordnung zwei Führungselemente umfassen, die in zwei voneinander beabstandeten Abschnitten des Randbereichs, insbesondere in einander bezüglich der Behälteröffnung gegenüberliegenden Abschnitten des Randbereichs, angeordnet sind, wobei das Rückhaltenetz entlang der Führungselemente verschiebbar ausgebildet ist.

Hierbei kann das Rückhaltenetz in seiner Gesamtheit oder lediglich teilweise verschoben werden. Als Verschieben ist insbesondere auch ein "Aufziehen" eines zuvor (zumindest teilweise) zusammengefalteten beziehungsweise gerafften Rückhaltenetzes zu verstehen.

Zum Beispiel kann das Rückhaltenetz hierzu mittelbar oder unmittelbar mit dem ersten und zweiten Führungselement verbunden sein.

Für den Fall der unmittelbaren Verbindung bedeutet dies, dass das Rückhaltenetz in unmittelbarem Kontakt mit den beiden Führungselementen stehen kann und von den Führungselementen beim Verstellen geführt und/oder gehalten wird. Hierzu ist es möglich, dass die Führungselemente an einem jeweiligen Ende des Rückhaltenetzes (sofern vorhanden) in einzelne Maschen eingreifen, um die Verbindung zu erzeugen, die dennoch eine Verstellbarkeit des Rückhaltenetzes ermöglicht. Zum Beispiel können die Führungsschienen draht-, stabförmig oder schienenförmig ausgeführt sein.

Alternativ oder zusätzlich kann das Rückhaltenetz aber auch mittels einer mittelbaren Verbindung über ein zwischengeordnetes Element mit den beiden Führungselementen verbunden sein. Dies kann erreicht werden, indem das zwischengeordnete Element einerseits mit dem Rückhaltenetz und andererseits wiederum selbst mit den beiden Führungselementen verbunden ist.

In diesem Fall kann die Netzanordnung beispielsweise ein elastisches Spannelement, insbesondere einen elastischen Spanngurt oder eine elastische Schnur, umfassen, welches mit einem ersten Ende verschiebbar mit dem ersten Führungselement und einem zweiten Ende verschiebbar mit dem zweiten Führungselement verbunden ist. Das elastische Spannelement kann auf diese Weise zwischen den beiden Führungselementen angeordnet, vorzugsweise gespannt, und dennoch entlang der Führungselemente verschiebbar sein. Vorzugsweise ist das Rückhaltenetz mit einem seiner Enden mit dem Spannelement verbunden und kann so durch ein Verschieben des Spannelementes in die mindestens zwei verschiedenen Positionen verstellt werden.

Das elastische Spannelement bietet außerdem den Vorteil, dass die Netzanordnung flexibel genug ist, um ein Be- oder Entladen auch durch ein simples Herunterdrücken des Spannelementes zu ermöglichen und das Rückhaltenetz (zumindest temporär) zu verschieben.

Um grundsätzlich ein unbeabsichtigtes Verschieben des Spannelementes (und damit auch des Rückhaltenetzes) zu verhindern, können die beiden Führungselemente jeweils eine Anzahl von definierten Rastpositionen umfassen, welche jeweils zum Eingreifen eines der beiden Enden des elastischen Spannelements ausgebildet sind. Steht das elastische Spannelement unter einer Vorspannung, können die Enden aufgrund ihres Eingriffs in die Rastpositionen und der resultierenden Rückstellkraft besonders sicher an der gewünschten Position gehalten werden.

Zusätzlich kann die Netzanordnung ein zwischen den beiden Führungselementen angeordnetes und mit dem Randbereich der Behälteröffnung verbundenes Verbindungselement umfassen, welches das Rückhaltenetz lokal mit dem Randbereich verbindet. Dies bedeutet, dass das Rückhaltenetz mit einem weiteren Ende mittels des Verbindungselements an dem Randbereich der Behälteröffnung fixierbar ist. Auf diese Weise kann ein Verschieben des fixierten Endes des Rückhaltenetzes verhindert werden. Dies bietet sich im verbauten Zustand am Fahrzeug insbesondere in einem bodennahen Bereich des Gepäckbehältnisses an, um einen zuverlässigen unteren Abschluss des Rückhaltenetzes gegenüber dem Randbereich der Behälteröffnung zu schaffen und ein Herausfallen von Gepäck zwischen Rückhaltenetz und Randbereich zu verhindern.

Gemäß einer weiteren Ausführungsform ist das Rückhaltenetz zumindest mit dem Verbindungselement und dem elastischen Spannelement verbunden. In diesem Fall kann das Rückhaltenetz also zumindest zwischen diesen beiden Elementen "aufgespannt" werden, indem das Rückhaltenetz mit einem ersten Ende einseitig ortsfest mit dem Verbindungselement an dem Randbereich und an einem entgegengesetzten zweiten Ende an dem elastischen Spannelement fixiert ist, so dass das Rückhaltenetz mit Hilfe des elastischen Spannelements entlang der beiden Führungselemente in verschiedene Positionen verstellt werden kann. Auf diese Weise ist es möglich durch die Verstellung den verschlossenen Anteil der Behälteröffnung zu variieren und so die Größe der zum Be- und Entladen verbleibenden Behälteröffnung bedarfsgerecht zu verändern. Auch kann aufgrund der besonders leichten Variierbarkeit die Größe der verbleibenden Behälteröffnung schnell und unkompliziert vergrößert und anschließend durch ein Verstellen des Rückhaltenetzes die Größe der verbleibenden Behälteröffnung wieder verkleinert werden, um ein Herausfallen zu verhindern.

Gemäß einer weiteren Ausführungsform kann die Netzanordnung einen im Wesentlichen U-förmig Führungsbügel umfassen, wobei das erste Führungselemente von einem ersten Schenkel und das zweite Führungselement von einem zweiten Schenkel des U-förmig Führungsbügel definiert werden. Beispielsweise kann der Führungsbügel aus einem gebogenen Stab aus Kunststoff oder Metall hergestellt sein, wodurch eine besonders einfache Herstellung ermöglicht wird. Die Form des Führungsbügels kann hierbei an einen Verlauf des Randbereichs der Behälteröffnung angepasst sein und diesem zumindest in Abschnitten im Wesentlichen folgen. Entsprechend ist die U-Form des Führungsbügels entsprechend breit zu verstehen, beispielsweise auch als V-Form oder im Wesentlichen gebogen ausgeführt.

Zusätzlich kann das Verbindungselement von einem den ersten Schenkel und den zweiten Schenkel miteinander verbindenden Mittelabschnitt des U-förmigen Führungsbügels definiert werden. Entsprechend ist es besonders einfach möglich, allein mit Hilfe des Führungsbügels das Rückhaltenetz an dem Gepäckbehältnis verstellbar zu befestigen, oder vorzugsweise ergänzt durch die zusätzliche Verwendung des elastischen Spannelements.

Die Verwendung des U-förmigen Führungsbügels erlaubt zudem, dass der erste und der zweite Schenkel jeweils Einbuchtungen zur Bereitstellung der definierten Rastpositionen aufweisen. Diese Ausgestaltung bietet den Vorteil, dass die Einbuchtungen besonders einfach und kostengünstig durch entsprechende Formgebung des Führungsbügels erzeugbar sind.

Gemäß einer bevorzugten Ausführungsform ist das Gepäckbehältnis ein Seitenkoffer oder eine Seitentasche für ein Motorrad oder ein motorradähnliches Fahrzeug. Als motorradähnliches Fahrzeug ist insbesondere ein Motorroller, zum Beispiel ein zweirädriger, dreirädriger oder vierrädriger Motorroller, ein Scooter, ein Trike, ein Quad oder dergleichen zu verstehen.

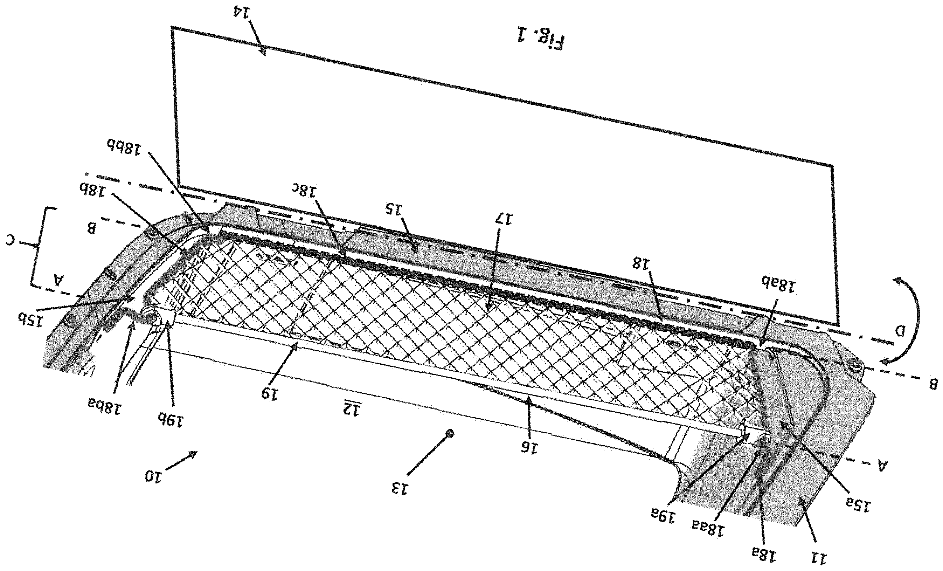

Eine Ausführungsform der Erfindung wird nachfolgend anhand der Figur näher beschrieben.

Diese zeigt in stark vereinfachter und lediglich teilweiser Darstellung ein als Seitenkoffer oder Seitentasche ausgestaltetes Gepäckbehältnis 10 für ein nicht dargestelltes Kraftfahrzeug, insbesondere ein Motorrad oder ein motorradähnliches Fahrzeug, mit einem ersten schalenförmigen Behälterteil 11, welcher ein Stauvolumen 12 zum Verstauen von Gepäck (nicht dargestellt) definiert und eine Behälteröffnung 13 zum Be- und Entladen des Stauvolumens 12 aufweist. Lediglich angedeutet ist ein zweiter Behälterteil 14 zum wahlweisen Verschließen des Gepäckbehältnisses 10, der in der dargestellten Ausführungsform klappbar um eine Drehachse D mit dem ersten Behälterteil 11 verbunden ist.

Der erste Behälterteil 11 weist in einem umlaufenden Randbereich 15 der Behälteröffnung 13 eine Netzanordnung 16 mit einem Rückhaltenetz 17 zum zumindest teilweisen Verschließen der Behälteröffnung 13 auf. Die Netzanordnung 16 ist zum Verstellen des Rückhaltenetzes 17 zwischen mindestens zwei Positionen A, B ausgebildet, um einen durch das Rückhaltenetz 17 verschlossenen Anteil C der Behälteröffnung 13 zu variieren.

Hierzu umfasst die Netzanordnung 16 zwei Führungselemente 18a, 18b, die in zwei voneinander beabstandeten Abschnitten 15a, 15b des Randbereichs 15, (in der dargestellten Ausführungsform in einander bezüglich der Behälteröffnung 13 gegenüberliegenden Abschnitten 15a, 15b des Randbereichs 15), angeordnet sind, wobei das Rückhaltenetz 17 entlang dieser Führungselemente 18a, 18b verschiebbar ausgebildet ist.

Das Rückhaltenetz 17 ist unmittelbar mit dem ersten und zweiten Führungselement 18a, 18b verbunden, indem sich die beiden Führungselemente 18a, 18b durch einzelne, äußere Maschen des Rückhaltenetz 17 hindurch erstrecken und so das Rückhaltenetz 17 in seitlicher Richtung aufspannen. Die Maschen sind entlang der Führungselemente 18a, 18b frei beweglich, so dass das Rückhaltenetz 17 entsprechend verstellbar ist.

Zusätzlich umfasst die Netzanordnung 16 ein elastisches Spannelement 19, in Form einer elastischen Schnur, welche mit einem ersten Ende 19a verschiebbar mit dem ersten Führungselement 18a und einem zweiten Ende 19b verschiebbar mit dem zweiten Führungselement 18b verbunden ist.

Die beiden Führungselemente 18a, 18b weisen jeweils zwei definierte Rastpositionen 18aa, 18ab und 18ba,18bb auf, welche jeweils zum Eingreifen eines der beiden Enden 18a, 18b des elastischen Spannelements 19 ausgebildet sind.

Zusätzlich umfasst die Netzanordnung 16 ein zwischen den beiden Führungselementen 18a, 18b angeordnetes und mit dem Randbereich der Behälteröffnung 13 verbundenes Verbindungselement 18c, welches das Rückhaltenetz 17 lokal mit dem Randbereich 15 verbindet. Das Rückhaltenetz 17 ist also zusätzlich zur Verbindung mit den beiden Führungselementen 18a, 18b außerdem mit dem Verbindungselement 18c und dem elastischen Spannelement 19 verbunden und somit auch zwischen diesen beiden Elementen aufgespannt, wenn sich das Spannelement 19 in der Position A befindet. In diesem Fall erfolgt diese Aufspannung zusätzlich zu der bereits mittels der beiden Führungselemente 18a, 18b erzielten Aufspannung, die im Wesentlichen quer hierzu gerichtet ist, wodurch das Rückhaltenetz 17 flächig aufgespannt werden kann. Soll ein Be- oder Entladen erfolgen, so kann das Spannelement 19 mit seinen Enden 19a, 19b in die Position B gebracht werden, wodurch das Rückhaltenetz 17 zusammengefaltet und der durch das Rückhaltenetz 17 verschlossene Anteil C der Behälteröffnung 13 reduziert wird.

Die dargestellte Ausführungsform weist die Besonderheit auf, dass die Netzanordnung 16 einen im Wesentlichen U-förmig Führungsbügel 18 umfasst, wobei das erste Führungselemente 18a von einem ersten Schenkel und das zweite Führungselement 18b von einem zweiten Schenkel des U-förmig Führungsbügel 18 definiert werden. Zusätzlich wird auch das Verbindungselement 18c von einem den ersten Schenkel und den zweiten Schenkel miteinander verbindenden Mitteiabschnitt des U-förmigen Führungsbügels 18 definiert. Diese besondere Ausgestaltung bietet die Möglichkeit, den Führungsbügel 18 als ein zusammenhängendes Bauteil leicht herzustellen und zu montieren. Auch können der erste und der zweite Schenkel jeweils Einbuchtungen zur Bereitstellung der definierten Rastpositionen a8aa, 18ab, 18ba, 18bb aufweisen.

## Patentansprüche

1. Gepäckbehältnis (10) für ein Kraftfahrzeug, insbesondere ein Motorrad oder ein motorradähnliches Fahrzeug, mit
- einem ersten Behälterteil (11), welches ein Stauvolumen (12) zum Verstauen von Gepäck definiert und eine Behälteröffnung (13) zum Be- und Entladen des Stauvolumens (12) aufweist, und
- einem zweiten Behälterteil (14) zum wahlweisen Verschließen des Gepäckbehältnisses (10),
wobei der erste Behälterteil (11) in einem Randbereich (15) der Behälteröffnung (13) eine Netzanordnung (16) mit einem Rückhaltenetz (17) zum zumindest teilweisen Verschließen der Behälteröffnung (13) aufweist,
**dadurch gekennzeichnet, dass** die Netzanordnung (16) zum Verstellen des Rückhaltenetzes (17) zwischen mindestens zwei Positionen (A,B) ausgebildet ist, um einen durch das Rückhaltenetz (17) verschlossenen Anteil (C) der Behälteröffnung (13) zu variieren.

2. Gepäckbehältnis nach Anspruch 1, **dadurch gekennzeichnet, dass** die Netzanordnung (16) zwei Führungselemente (18a, 18b) umfasst, die in zwei voneinander beabstandeten Abschnitten (15a, 15b) des Randbereichs (15), insbesondere in einander bezüglich der Behälteröffnung (13) gegenüberliegenden Abschnitten des Randbereichs (15), angeordnet sind, wobei das Rückhaltenetz (17) entlang der Führungselemente (18a, 18b) verschiebbar ausgebildet ist.

3. Gepäckbehältnis nach Anspruch 2, **dadurch gekennzeichnet, dass** das Rückhaltenetz (17) mittelbar oder unmittelbar mit dem ersten und zweiten Führungselement (18a, 18b) verbunden ist.

4. Gepäckbehältnis nach Anspruch 2 oder 3, **dadurch gekennzeichnet, dass** die Netzanordnung (16) ein elastisches Spannelement (19), insbesondere einen elastischen Spanngurt oder eine elastische Schnur, umfasst, welches mit einem ersten Ende (19a) verschiebbar mit dem ersten Führungselement (18a) und einem zweiten Ende (19b) verschiebbar mit dem zweiten Führungselement (18b) verbunden ist.

5. Gepäckbehältnis nach Anspruch 4, **dadurch gekennzeichnet, dass** die beiden Führungselemente (18a, 18b) jeweils eine Anzahl von definierten Rastpositionen (18aa, 18ab, 18ba, 18bb) umfassen, welche jeweils zum Eingreifen eines der beiden Enden (19a, 19b) des elastischen Spannelements (19) ausgebildet sind.

6. Gepäckbehältnis nach mindestens einem der Ansprüche 2 bis 5, **dadurch gekennzeichnet, dass** die Netzanordnung (16) ein zwischen den beiden Führungselementen (18a,18b) angeordnetes und mit dem Randbereich (15) der Behälteröffnung (13) verbundenes Verbindungselement (18c) umfasst, welches das Rückhaltenetz (17) lokal mit dem Randbereich (15) verbindet.

7. Gepäckbehältnis nach Anspruch 6, **dadurch gekennzeichnet, dass** das Rückhaltenetz (17) zumindest mit dem Verbindungselement (18c) und dem elastischen Spannelement (19) verbunden ist.

8. Gepäckbehältnis nach mindestens einem der Ansprüche 2 bis 7, **dadurch gekennzeichnet, dass** die Netzanordnung (16) einen im Wesentlichen U-förmig Führungsbügel (18) umfasst, wobei das erste Führungselement (18a) von einem ersten Schenkel und das zweite Führungselement (18b) von einem zweiten Schenkel des U-förmig Führungsbügel (18) definiert werden.

9. Gepäckbehältnis nach Anspruch 8, **dadurch gekennzeichnet, dass** das Verbindungselement (18c) von einem den ersten Schenkel und den zweiten Schenkel miteinander verbindenden Mittelabschnitt des U-förmigen Führungsbügels (18) definiert wird.

10. Gepäckbehältnis nach mindestens einem der Ansprüche 8 bis 9, **dadurch gekennzeichnet, dass** der erste und der zweite Schenkel jeweils Einbuchtungen zur Bereitstellung der definierten Rastpositionen (18aa, 18ab, 18ba,18bb) aufweisen.

11. Gepäckbehältnis nach mindestens einem der Ansprüche 1 bis 10, **dadurch gekennzeichnet, dass** das Gepäckbehältnis (10) ein Seitenkoffer oder eine Seitentasche für ein Motorrad oder ein motorradähnliches Fahrzeug ist.

## Claims

1. A luggage container (10) for a motor vehicle, especially a motorcycle or a vehicle similar to a motorcycle vehicle, with
- a first container part (11) which defines a stowing volume (12) for stowing luggage and has a container opening (13) for loading and unloading the stowing volume (12), and
- a second container part (14) for optionally closing the luggage container (10),
wherein the first container part (11) in an edge region (15) of the container opening (13) has a net arrangement (16) with a retaining net (17) for at least partially closing the container opening (13),
**characterised in that** the net arrangement (16) is designed to adjust the retaining net (17) between at least two positions (A, B), in order to vary a proportion (C) of the container opening (13) which is closed by the retaining net (17).

2. A luggage container according to Claim 1, **characterised in that** the net arrangement (16) comprises two guide elements (18a, 18b) which are arranged in two spaced-apart portions (15a, 15b) of the edge region (15), especially in portions of the edge region (15) which lie opposite one another with respect to the container opening (13), wherein the retaining net (17) is designed to be displaceable along the guide elements (18a, 18b).

3. A luggage container according to Claim 2, **characterised in that** the retaining net (17) is connected indirectly or directly to the first and second guide element (18a, 18b).

4. A luggage container according to Claim 2 or Claim 3, **characterised in that** the net arrangement (16) comprises an elastic tensioning element (19), especially an elastic tensioning strap or an elastic cord, which is connected displaceably to the first guide element (18a) by a first end (19a) and is connected displaceably to the second guide element (18b) by a second end (19b).

5. A luggage container according to Claim 4, **characterised in that** the two guide elements (18a, 18b) in each case comprise a number of defined latching positions (18aa, 18ab, 18ba, 18bb) which in each case are designed to engage one of the two ends (19a, 19b) of the elastic tensioning element (19).

6. A luggage container according to at least one of Claims 2 to 5, **characterised in that** the net arrangement (16) comprises a connecting element (18c) arranged between the two guide elements (18a, 18b) and connected to the edge region (15) of the container opening (13), which connecting element connects the retaining net (17) locally to the edge region (15).

7. A luggage container according to Claim 6, **characterised in that** the retaining net (17) is connected at least to the connecting element (18c) and the elastic tensioning element (19).

8. A luggage container according to at least one of Claims 2 to 7, **characterised in that** the net arrangement (16) comprises a substantially U-shaped guide bracket (18), wherein the first guide element (18a) is defined by a first arm and the second guide element (18b) by a second arm of the U-shaped guide bracket (18).

9. A luggage container according to Claim 8, **characterised in that** the connecting element (18c) is defined by a central portion of the U-shaped guide bracket (18) which connects together the first arm and the second arm.

10. A luggage container according to at least one of Claims 8 to 9, **characterised in that** the first and the second arm in each case have indentations for providing the defined latching positions (18aa, 18ab, 18ba, 18bb).

11. A luggage container according to at least one of Claims 1 to 10, **characterised in that** the luggage container (10) is a side case or a side bag for a motorcycle or a vehicle similar to a motorcycle.

## Revendications

1. Caisson à bagages (10) destiné à un véhicule automobile en particulier à un motocycle ou à un véhicule similaire à un motocycle comprenant :
- une première partie de caisson (11) qui définit un volume de rangement (12) permettant de ranger des bagages et une ouverture de caisson (13) permettant de charger et de décharger le volume de rangement (12), et
- une seconde partie de caisson (14) permettant de fermer sélectivement le caisson à bagages (10),
la première partie de caisson (11) comprenant, dans une zone de bord (15) de l'ouverture de caisson (13) un agencement de filet (16) ayant un filet de retenue (17) permettant de fermer au moins partiellement l'ouverture (13) du caisson,
**caractérisé en ce que**
l'agencement de filet (16) est réalisé pour permettre de régler le filet de retenue (17) entre au moins deux positions (A, B) pour permettre de faire varier la partie (C) de l'ouverture (13) du caisson fermée par le filet de retenue (17).

2. Caisson à bagages conforme à la revendication 1,
**caractérisé en ce que**
l'agencement de filet (16) comporte deux éléments de guidage (18a, 18b) qui sont installés dans deux segments (15a, 15b) situés à distance l'un de l'autre de la zone de bord (15), en particulier dans des segments de la zone de bord (15) situés à l'opposé l'un de l'autre par rapport à l'ouverture (13) du caisson, le filet de retenue (17) étant mobile en translation le long des éléments de guidage (18a, 18b).

3. Caisson à bagages conforme à la revendication 2,
**caractérisé en ce que**
le filet de retenue (17) est relié indirectement ou directement au premier élément de guidage et au second élément de guidage (18a, 18b).

4. Caisson à bagages conforme à la revendication 2 ou 3,
**caractérisé en ce que**
l'agencement de filet (16) comporte un élément tendeur élastique (19), en particulier une sangle tendeuse élastique ou un cordon élastique qui est relié en pouvant coulisser par une première extrémité (19a) avec le premier élément de guidage (18a) et par une seconde extrémité (19b) avec le second élément de guidage (18b).

5. Caisson à bagages conforme à la revendication 4,
**caractérisé en ce que**
les deux éléments de guidage (18a, 18b) ont chacun un ensemble de positions d'encliquetage définies (18aa, 18ab, 18ba, 18bb) qui sont respectivement réalisées pour venir en prise avec l'une des deux extrémités (19a, 19b) de l'élément de tension élastique (19).

6. Caisson à bagages conforme à au moins l'une des revendications 2 à 5,
**caractérisé en ce que**
l'agencement de filet (16) comporte un élément de liaison (18c) installé entre les deux éléments de guidage (18a, 18b) et relié à la zone de bord (15) de l'ouverture (13) du caisson, qui relie localement le filet de retenue (17) avec la zone de bord (15).

7. Caisson à bagages conforme à la revendication 6,
**caractérisé en ce que**
le filet de retenue (17) est relié au moins à l'élément de liaison (18c) et à l'élément tendeur élastique (19).

8. Caisson à bagages conforme à au moins l'une des revendications 2 à 7,
**caractérisé en ce que**
l'agencement de filet (16) comporte un étrier de guidage (18) essentiellement en forme de U et le premier élément de guidage (18a) est défini par une première branche de l'étrier de guidage (18) en forme de U et le second élément de guidage (18b) est défini par la seconde branche de l'étrier de guidage (18) en forme de U.

9. Caisson à bagages conforme à la revendication 8,
**caractérisé en ce que**
l'élément de liaison (18c) est défini par le segment médian de l'étrier de guidage (18) en forme de U qui relie l'une à l'autre la première branche et la seconde branche.

10. Caisson à bagages conforme à au moins l'une des revendications 8 et 9,
**caractérisé en ce que**
la première branche et la seconde branche comportent chacune des renfoncements permettant de former les positions d'encliquetage définies (18aa, 18ab, 18ba, 18bb).

11. Caisson à bagages conforme à au moins l'une des revendications 1 à 10,
**caractérisé en ce qu'**
il est constitué d'un coffre latéral ou d'une pochette latérale destiné(e) à un motocycle ou à un véhicule similaire à un motocycle.
